(19) Europäisches Patentamt
European Patent Office
Office européen des brevets

(11) EP 2 016 635 B1

(12) # FASCICULE DE BREVET EUROPEEN

(45) Date de publication et mention de la délivrance du brevet:
**08.03.2017 Bulletin 2017/10**

(21) Numéro de dépôt: **07719346.4**

(22) Date de dépôt: **25.01.2007**

(51) Int Cl.:
*H01M 4/36* (2006.01) *B05D 5/12* (2006.01)
*C09D 5/00* (2006.01) *G11B 5/706* (2006.01)
*G11B 5/708* (2006.01) *H01B 1/00* (2006.01)
*H01B 1/14* (2006.01) *H01B 1/18* (2006.01)
*H01M 4/485* (2010.01) *H01M 4/587* (2010.01)
*H01M 4/505* (2010.01) *H01M 4/525* (2010.01)

(86) Numéro de dépôt international:
**PCT/CA2007/000096**

(87) Numéro de publication internationale:
**WO 2007/085082 (02.08.2007 Gazette 2007/31)**

(54) **MÉLANGE COBROYÉ D'UN MATÉRIAU ACTIF ET D'UN MATÉRIAU DE CONDUCTION, SES PROCÉDÉS DE PRÉPARATION ET SES APPLICATIONS**

ZUSAMMEN ZERKLEINERTE MISCHUNG EINES AKTIVMATERIALS UND EINES LEITFÄHIGEN MATERIALS, HERSTELLUNGSVERFAHREN UND VERWENDUNGEN DAFÜR

CO-CRUSHED MIXTURE OF AN ACTIVE MATERIAL AND OF A CONDUCTIVE MATERIAL, PREPARATION METHODS AND USES THEREOF

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **26.01.2006 CA 2534276**

(43) Date de publication de la demande:
**21.01.2009 Bulletin 2009/04**

(73) Titulaire: **HYDRO-QUEBEC**
**Montréal, Québec H2Z 1A4 (CA)**

(72) Inventeurs:
- **ZAGHIB, Karim**
  **Longueuil, Québec J4M 2M7 (CA)**
- **PETITCLERC, Michel**
  **Sainte-Julie - Québec J3M 3M7 (CA)**
- **CHAREST, Patrick**
  **Ste-Julie, Québec J3E 1P2 (CA)**
- **GUERFI, Abdelfast**
  **Brossard, Québec J4X 1W2 (CA)**
- **DONTIGNY, Martin**
  **Notre-Dame-du-Mont-Carmel, Québec G0C 3J0 (CA)**

(74) Mandataire: **Goulard, Sophie et al**
**Ipsilon**
**Le Centralis**
**63, avenue du Général Leclerc**
**92340 Bourg-la-Reine (FR)**

(56) Documents cités:
**EP-A1- 1 261 050** **EP-A1- 1 491 501**
**EP-A1- 1 997 169** **US-A- 5 521 026**
**US-A1- 2002 122 985** **US-A1- 2005 058 907**
**US-A1- 2005 250 010** **US-A1- 2005 285 080**
**US-B1- 6 569 557**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 016 635 B1

## Description

### DOMAINE DE L'INVENTION

La présente invention est relative à un matériau (ou mélange polymère) constitué par au moins un mélange de particules dispersé dans au moins un polymère, ledit mélange de particules étant constitué de particules d'un matériau actif qui font office de support et sur lesquelles sont attachées des particules d'un matériau de conduction. Les particules du matériau actif, de même que celles du matériau de condition sont choisies de façon à présenter des surfaces spécifiques comprises dans des domaines particuliers, et de façon à ce que le rapport (surface spécifique du matériau de conduction/surface spécifique du matériau actif) soit lui aussi compris dans un domaine particulier de valeurs.
Le mélange de particules est ainsi dissous dans une matrice polymère.
La présente invention porte aussi sur un procédé permettant la préparation d'un matériau constitué par au moins un mélange de particules dispersé dans au moins un polymère par cobroyage de particules d'un matériau actif et de particules d'un matériau de conduction et dispersion du cobroyé dispersé dans une solution de polymère.
La présente invention porte également sur une électrode pour un dispositif électrochimique comprenant ledit matériau de l'invention, notamment pour une batterie polymère ou un Accumulateur à Electrolyte Polymère pour un mélange polymère sec.
La présente invention porte également sur une peinture ou un revêtement de bande magnétique intégrant ledit matériau de l'invention.

### ÉTAT DE LA TECHNIQUE

Les additifs électroconducteurs sont généralement employés dans la préparation des cathodes pour les batteries lithium polymère et lithium-ion afin de compenser la faible conductivité du matériau de charge tel que : $LiCoO_2$, $LiMn_2O_4$, $LiNiO_2$, $LiV_3O_8$, $LiV_6O_{13}$, $Li_4Ti_5O_{12}$, $LiFePO_4$, $LiNi_{1/3}Co_{1/3}Mn_{1/3}O_2$, et ce, afin de permettre à ces matériaux d'avoir de meilleures performances. Les additifs à base de matériau de conduction contribuent à augmenter la capacité et la cyclabilité, ainsi qu'à réduire la résistance interne de la batterie.
La préparation d'un mélange cobroyé par voie liquide est décrite dans le brevet d'Hydro-Québec CA-A-2,140,456, délivré le 18 janvier 1995. Le mélange cobroyé par voie liquide y est préparé à partir d'un prè-cobroyé d'une solution contenant un pourcentage élevé de particules (oxyde plus additif de conduction ayant une grande surface spécifique et une absorption d'huile élevée) mélangé dans un solvant ou dans un mélange de solvant, à l'aide d'un "bail mill" ou "jar-mill", en présence de billes en acier. Le mélange cobroyé est évaporé et séché à 95°C, pendant 48 heures sous air. Le prè-cobroyé ainsi obtenu est constitué de poudre sèche de particules agglomérées. Cette poudre séchée est ensuite dispersée dans une solution comportant du polymère salé ou non salé. Le mélange obtenu forme le mélange cobroyé pour enduction. Ce procédé est coûteux et non environnemental, de plus les cathodes préparées contiennent des impuretés provenant des billes d'acier.
Une reproduction du procédé de l'art antérieur a révélé, en particulier dans la préparation d'électrodes polymères, qu'une faible partie seulement des agglomérats présents dans les noirs de carbone, utilisés comme matériau de conduction, sont dispersés durant la préparation des mélanges de cobroyage.
Il existait donc un besoin pour un procédé de préparation de mélanges de particules d'un matériau de conduction et de particules d'un matériau actif, dépourvu des inconvénients des procédés connus et résultant notamment dans la production de mélanges de ces particules ayant une très faible teneur en agglomérats résiduels.
Il existait également un besoin pour de nouvelles électrodes à capacité accrue, et ce à épaisseur égale.

### SOMMAIRE

Un premier objet de la présente invention est un matériau constitué par au moins un mélange de particules dispersé dans au moins un polymère, caractérisé en ce que le mélange de particules est constitué par des particules ayant une distribution granulométrique d50 comprise entre 0,1 et 50 $\mu$m, et plus préférentiellement une d50 comprise entre 1 et 20 $\mu$m, lesdites particules étant constituées par un support à base d'au moins un matériau actif $M_1$ de taille moyenne $T_1$ et de surface spécifique $S_1$ sur lequel sont attachées, par des liaisons physiques et/ou chimiques, des particules d'au moins un matériau conducteur électronique $M_2$ de taille moyenne $T_2$ et de surface spécifique $S_2$, ledit mélange de particules étant tel que :

- le rapport des tailles moyennes $T_1/T_2$ est compris entre 5 et 10000, plus préférentiellement entre 10 et 1000;
- le rapport des surfaces spécifiques $S_1/S_2$ est compris entre 1/300 et 1/2, plus préférentiellement entre 1/150 et 1/10; et
- la surface spécifique $S_2$ du matériau conducteur électronique $M_2$ est inférieure à 200 $m^2/g$ ;

ledit matériau présentant une porosité inférieure à 20 %.

La quantité de matériau actif présent dans le mélange représente de préférence plus de 80 %, plus préférentiellement encore entre 90 et 97 % de la quantité du matériau de conduction.

Le mélange de particules du matériau de l'invention est obtenu par cobroyage.

Selon un autre mode avantageux, les particules du matériau actif $M_1$ peuvent être recouvertes pour 1 à 50 %, de préférence pour 5 à 20 %, de leur surface par le matériau conducteur électronique $M_2$.

Avantageusement, le matériau de conduction qui est de préférence un carbone, peut présenter au moins une des caractéristiques suivantes:

- une très faible nanoporosité, mesurée selon la méthode MET (Microscope à Transmission Électronique);
- une absorption d'huile, mesurée selon la méthode "Iodine Absorption", qui est inférieure à 200 mg/g, et de préférence comprise entre 100 mg/g et 20 mg/g; et
- une résistivité inférieure à 0,2 Ω.cm.

De préférence, le matériau de conduction utilisé présente au moins une des propriétés suivantes :

- une résistivité comprise entre 0,03 et 0,2 Ω.cm;
- le matériau de conduction présente une surface spécifique qui est comprise entre 20 et 100 $m^2/g$;
- un degré de fluidité, mesuré selon la méthode de mesure de l'angle de repos et de la compressibilité ("Powder tester", Hosokawa) qui est supérieur à 65, ledit matériau étant obtenu de préférence en surpoudrant la surface des particules ($M_1$) avec du carbone, de préférence avec du carbone choisi dans le groupe constitué par les noirs d'acétylène, dans lequel le matériau de conduction est caractérisé par une faible absorption d'huile, qui est, mesurée selon la méthode ASTM D-2414, de préférence inférieure à 400 mg/g et plus préférentiellement encore comprise entre 10 et 100 mg/g; et
- les particules du matériau de conduction présentes constituent un mélange homogène caractérisé par une distribution monodispersée dont le pic est compris entre 1 nm et 100 nm, de préférence le pic de monodistribution est compris entre 20 et 80 nm.

Avantageusement, le matériau de conduction peut être du noir de carbone de type Denka Black.

Selon un autre mode avantageux de réalisation de l'invention, le matériau actif peut présenter une surface spécifique supérieure à 0,1 $m^2/g$, de préférence la surface spécifique est comprise entre 1 et 10 $m^2/g$.

De préférence, le matériau actif présent dans le mélange est choisi dans le groupe constitué par :

a) les oxydes de métaux de transition, de préférence ceux choisis dans le groupe constitué par $LiV_3O_8$, $LiV_6O_{13}$, $V_6O_{13}$, $LiV_2O_5$ $V_2O_5$, $V_2O_5$ lithié, $LiMn_2O_4$, et $LiCoO_2$;

b) les phosphates de transition, de préférence ceux choisis dans le groupe constitué par $LiFePO_4$ et $LiMn_xFe_{(1-x)}PO_4$ ($x \leq 1$);

c) les silicates des métaux de transition, de préférence les silicates de fer, et plus préférentiellement ceux choisis dans le groupe constitué par $Li_2FeSiO_4$ et $Li_2GeSiO_4$; et

d) un mélange d'au moins deux entités chimiques définies dans les points a) à c) précédents.

Une sous-famille préférentielle de mélanges de l'invention peut comprendre plus qu'un matériau de conduction, et de préférence au moins un des matériaux de conduction est choisi dans le groupe constitué par les noirs de carbone, les graphites, les fibres de carbone, et les mélanges d'au moins deux de ces derniers.

Le mélange de particules du matériau de l'invention est préparé par cobroyage à sec par mécanofusion, dans un rapport massique $1 \leq M_2/M_1 \leq 15$ % :

- d'un matériau actif ($M_1$), ayant une surface spécifique $S_1$; et
- d'un matériau de conduction électronique ($M_2$), ayant une surface spécifique $S_2$ avec $S_1/S_2$ compris entre 1/300 et 1/2.

Le mélange est homogène, avec un nombre d'agglomérats très faible, la masse des agglomérats représentant moins de 15 % de la masse totale du mélange, et le rapport de la taille des particules $T_1/T_2$ est compris entre 5 et 10000.

De préférence, le cobroyage peut être réalisé à une température comprise entre 0 et 60°C, et avec un apport énergétique qui est, de préférence, compris entre 0,1 kWh et 1,5 kWh par kg de poudre.

Le cobroyage s'effectue à sec.

Avantageusement, le cobroyage peut s'effectuer en présence d'un gaz choisi de préférence dans le groupe des gaz inertes, et notamment dans le groupe constitué par l'argon, l'azote et les mélanges de ces derniers.

De préférence, le cobroyage peut s'effectuer pendant un période de temps variant de 5 à 180 minutes, plus

avantageusement encore, pendant une période comprise entre 15 et 90 minutes.

Selon une variante préférentielle, le cobroyé peut être préparé en deux étapes qui sont une étape de désagglomération et d'homogénéisation du matériau actif et une étape d'ajout du conducteur électronique et d'homogénéisation du mélange cobroyé.

Le mélange de particules du matériau de l'invention est susceptible d'être obtenu par mise en oeuvre d'un procédé tel que défini ci-dessus.

Le mélange de particules peut être utilisé dans la préparation d'électrodes dans des batteries, notamment dans des batteries liquides cathodes ou dans les peintures, ou comme revêtement de bandes magnétiques.

Dans le matériau conforme au premier objet de l'invention, ledit mélange de particules est dispersé dans au moins un polymère (matrice polymère), de préférence sous forme de solution polymère. La quantité de polymère utilisé pour réaliser la dispersion représente, de préférence, entre 50 et 10 %, plus préférentiellement encore de 40 à 15 % de la quantité totale de matériau(x) de conduction et de matériau(x) actif(s) présent(s) dans le mélange initial.

Une sous-famille préférentielle de matériaux de l'invention peut être obtenue avec des polymères choisis dans le groupe constitué par les polymères à 3 branches, plus particulièrement dans le groupe des polymères de type P70, des polymères à 4 branches de type Elexcel® commercialisé par la société DKS-Japon, plus préférentiellement encore ceux choisis dans le groupe constitué par les polymères de type EG et/ou leurs mélanges, ainsi que dans le groupe des polymères salés correspondants.

Un deuxième objet de la présente invention est constitué par un procédé de préparation d'un matériau tel que défini dans le premier objet de la présente invention, par :

- préparation d'un mélange de particules par cobroyage à sec par mécanofusion, dans un rapport massique $1 \leq M_2/M_1 \leq 15$ % :
- d'un matériau de charge ($M_1$) ayant une surface spécifique $S_1$; et
- d'un matériau de conduction ($M_2$), ayant une surface spécifique $S_2$ où $S_1/S_2$ est compris entre 1/300 et 1/2, le rapport de la taille des particules $T_1/T_2$ variant entre 5 et 10000;

ledit mélange étant homogène et avec un pourcentage massique d'agglomérats représentant moins de 15 % (i.e. très peu d'agglomérats), et de préférence moins de 10 % de la masse totale du mélange polymère, voire même sans agglomérats; et

- dispersion du cobroyé dispersé dans une solution de polymère, ladite solution polymère comprenant un ou plusieurs polymères, de 5 à 35 %, ainsi que de 65 à 95 %, plus préférentiellement de 70 à 95 % d'un solvant choisi dans le groupe des solvants organiques et des mélanges d'au moins deux solvants organiques choisis dans le groupe constitué par les solvants non polaires de type aliphatique ou cycloaliphatique, plus préférentiellement encore l'acétonitrile, le toluène et les mélanges de ces derniers; ou encore
- par dispersion du cobroyé dispersé dans une solution de polymère, ladite solution polymère comprenant environ 50 % d'un ou de plusieurs polymères ainsi qu'environ 50 % d'un solvant choisi dans le groupe des solvants organiques et des mélanges d'au moins deux solvants organiques choisis dans le groupe constitué par les solvants non polaires de type aliphatique ou cycloaliphatique, plus préférentiellement encore l'acétonitrile, le toluène et les mélanges de ces derniers.

Selon une variante avantageuse, le mélange cobroyé peut être mélangé avec une solution de polymère pour aboutir à un mélange d'épandage ayant une viscosité comprise entre 0,3 et 3,5 Pa/sec.

Le matériau conforme au premier objet de l'invention peut être obtenu par mise en oeuvre d'un procédé défini dans le deuxième objet de la présente invention.

Le matériau défini dans le premier objet ou tel qu'obtenu par le deuxième objet de l'invention peut être utilisé dans une batterie liquide et/ou dans une batterie polymère, ou gel ou tout polymère, de préférence comme matériau constitutif (de préférence pour au moins 15 %) du revêtement d'électrode, ou dans les peintures ou comme revêtement de bandes magnétiques.

Le mélange de particules du matériau défini dans le premier objet de l'invention ou tel qu'obtenu par un procédé tel que défini dans le deuxième objet de l'invention peut être incorporé dans au moins un de ses éléments constitutifs de systèmes électrochimiques, notamment de batteries.

De préférence, le système électrochimique est de type batterie liquide.

Le matériau tel que défini dans le premier objet de l'invention ou tel qu'obtenu par le deuxième objet de l'invention peut être incorporé dans au moins un de ses éléments constitutifs de systèmes électrochimiques, notamment de piles à combustibles.

De préférence, le système électrochimique est de type batterie polymère ou de type ACEP pour un mélange polymère sec.

Un troisième objet de la présente invention est constitué par les électrodes, de préférence les cathodes, comportant au moins un matériau tel que défini dans le premier objet de la présente invention.
L'électrode peut présenter en outre au moins une des caractéristiques suivantes :

- nombre d'agglomérats par $cm^2$ réduit, de préférence réduit d'au moins 25 %, plus préférentiellement réduit d'au moins 50 %, par rapport notamment aux électrodes à base de noir de Ketjen de l'art antérieur;
- une capacité variable entre 1 $mAh/cm^2$ à 10 $mAh/cm^2$;
  et
- une résistance ohmique comprise entre 5 et 50 $ohm/cm^2$.

## DESCRIPTION BRÈVE DES DESSINS

Les Figures 1A et 1B illustrent de façon schématique un mélange cobroyé de matériau actif ($M_1$) et d'un conducteur électronique ($M_2$) sans et avec agglomérats, respectivement.

Les Figures 2A et 2B illustrent de façon schématique un schéma d'un mélange cobroyé de matériau actif ($M_1$) et d'un conducteur électronique ($M_2$) dispersé dans une solution polymère sans et avec agglomérats, respectivement.

Les Figures 3A et 3B sont des vues au microscope électronique à balayage (MEB) du conducteur électronique ($M_1$), le carbone Denka, utilisé dans les exemples 2-6.

Les Figures 4A et 4B sont des vues au microscope électronique à balayage (MEB) de particules du conducteur électronique ($M_1$) avec détermination de la taille des particules.

Les Figures 5A et 5B sont des vues de la surface des particules du conducteur électronique obtenue par microscope électronique à transmission (TEM).

La Figure 6 est un diagramme de distribution granulométrique du carbone Denka pressé à 100 %.

La Figure 7 est une vue au microscope électronique à balayage d'un mélange, selon l'exemple 2, d'un cobroyé à sec de $LiV_3O_8$ avec du carbone Denka obtenu à sec par mécanofusion.

## DESCRIPTION DÉTAILLÉE DES RÉALISATIONS PRÉFÉRÉES

Dans le cadre de cette divulgation, la notion de "mélange homogène" sert à qualifier un mélange de particules de matériaux actifs et/ou de matériaux de conduction, caractérisé par un spectre, obtenu par microscope électronique à balayage, dans lequel la distribution des espèces électroniques, par rapport à celle des particules de matériau actif, est réalisée de façon homogène. Un tel mélange comporte une teneur minimale en agglomérats de l'une ou l'autre des espèces.
L'homogénéité d'un mélange de particules de l'invention est ainsi caractérisée, pour les particules de matériau actif qui le constituent, par un monopic de dispersion compris entre 0,10 et 20 $\mu m$, de préférence entre 0,5 et 10 $\mu m$.
La mesure de la résistance du mélange dispersé dans un liant reflète, quant à elle, l'homogénéité du mélange (méthode de spectroscopie d'impédance). Dans le cas d'un liant de type polymère polyéther avec un MW de 70000 (P70), le seuil de résistivité, mesuré à 25°C, au-delà duquel le mélange sera considéré comme homogène, se situe entre environ 5 et 50 $ohm/cm^2$.
Dans le cadre de cette divulgation, on considère comme "matériau actif" un matériau électrochimiquement actif dans une batterie et plus particulièrement électrochimiquement actif dans une électrode.
Ces matériaux sont choisis de préférence dans le groupe constitué par :

a) les oxydes de métaux de transition, notamment ceux du groupe constitué par $LiV_3O_8$, $LiVeO_{13}$, $V_6O_{13}$, $LiV_2O_5$, $V_2O_5$, $V_2O_5$ lithié, $LiMn_2O_4$, $LiCoO_2$, et les mélanges d'au moins deux de ces derniers;
b) les phosphates de transition, notamment ceux choisis dans le groupe constitué par $LiFePO_4$, $LiMn_xFe_{(1-x)}PO_4$ avec ($x \leq 1$), et les mélanges d'au moins deux de ces derniers;
c) les silicates des métaux de transition, plus préférentiellement ceux choisis dans le groupe constitué par les silicates de fer et par les mélanges d'au moins deux silicates de fer différents, et à titre d'exemple $Li_2FeSiO_4$ et $Li_2GeSiO_4$; et

d) les mélanges d'au moins deux des espèces chimiques définies dans a), b) et/ou c).

Dans le cadre de cette divulgation, les matériaux actifs avantageusement utilisés présentent une surface spécifique mesurée selon la méthode BET qui est comprise entre 0,5 et 10 $m^2/g$, plus préférentiellement encore leur surface spécifique est comprise entre 1 et 3 $m^2/g$.

Dans le cadre de cette divulgation, en ce qui a trait à un "matériau de conduction", le critère de conductivité et/ou de non conductivité d'un matériau qui suit est retenu.

La conductivité électrique d'une substance, aussi appelée aptitude d'une surface à conduire un courant électrique, est définie comme étant l'inverse de la résistivité : $\sigma = 1/p$. Comme l'intensité du champ électrique dans le matériau s'exprime par la relation $E = V/L$, la loi d'Ohm peut s'écrire en termes de densité de courant par la formule $J = \sigma E$. On considère comme métaux conducteurs ceux dont le $\sigma > 10^5\ (\Omega.m)^{-1}$. On considère comme matériaux semi-conducteurs ceux qui vérifient la relation : $10^{-6} < \sigma < 10^5\ (\Omega.m)^{-1}$. On considère comme matériaux isolants ceux vérifiant la relation $\sigma < 10^{-6}\ (\Omega.m)^{-1}$.

Dans le cadre de cette divulgation, on classifie comme matériaux, notamment comme polymères, conducteurs ceux qui ont une conductivité supérieure à $10^{-5}\ (\Omega.m)^{-1}$ et comme matériaux (notamment comme polymères) non conducteur ceux qui ont une conductivité inférieure ou égale à $10^{-6}\ (\Omega.m)^{-1}$.

Dans le cadre de cette divulgation, les différentes méthodes de référence utilisées pour la mesure du paramètre physique appelé "surface spécifique" mettent en oeuvre l'adsorption physique d'un gaz à basse température. Ces méthodes sont fondées sur les travaux de Brunauer, Emmett et Teller, plus connus généralement sous les initiales BET, datant de 1938. Le calcul de surface spécifique se base sur le traitement analytique de l'isotherme d'adsorption déterminé expérimentalement. Il est ainsi possible de définir la quantité de gaz adsorbé en une monocouche complète, puis de calculer l'aire de cette couche, donc la surface spécifique de la poudre ou du solide.

L'équation pour l'adsorption physique d'un gaz sur un solide - dite équation BET - permet de déterminer le volume adsorbé en monocouche: Vm. Une fois ce volume connu, la surface spécifique de l'échantillon est obtenue par l'équation: S = n.Sm, dans laquelle S représente la surface totale de l'échantillon et n le nombre de molécules de gaz adsorbées en monocouche. Sm correspond à la surface d'une molécule de gaz.

$$S = [(6.10^{23}.Vm / 22214)Sm] / \text{masse de l'échantillon} = \text{Surface spécifique en } m^2/g$$

Les valeurs de surface spécifique d'une molécule donnée de gaz sont connues. La molécule d'azote est caractérisée par une surface spécifique de 16,2 Å, celle du Krypton de 20,2 Å et celle de l'argon de 16,6 Å, pour ne citer que les plus courantes. Ces valeurs sont données pour une température de 77 K.

Dans le cadre de cette divulgation, l' "absorption d'huile" est mesurée selon la méthode ASTM D-2414. C'est le degré auquel les particules du matériau de conduction ont fusionné ensemble pour former des agrégats.

Tel qu'utilisé dans le cadre de cette divulgation, l'expression "polymères à 3 branches" est apparentée, comme illustré dans le document "Relationship between Structural Factor of Gel Electrolyte and Characteristics of Electrolyte and Lithium-ion Polymer Battery Performances", par Hiroe Nakagawa et al., The 44th Symposium in Japan, Nov 4-6, 2003, abstract 3D26, à des polymères à trois branches ont la forme d'un peigne à 3 branches. Les 3 branches sensiblement parallèles de ces polymères sont fixées de préférence au centre et aux deux extrémités d'un squelette de petite taille, comportant de préférence 3 atomes, de préférence 3 atomes de carbone, dans la chaîne.

Dans le cas d'une chaîne à 3 atomes de carbones, chacun de ces atomes est relié à une branche.

Parmi ces polymères à 3 branches, et dans le cadre de la présente invention, on préfère ceux qui présentent un poids moléculaire moyen (MW) variant de 1000 à 1000000, plus préférentiellement encore ceux dont le poids moléculaire moyen varie de 5000 à 100000.

Les polymères à 4 branches ont la forme d'un peigne à 4 branches. Les 4 branches sensiblement parallèles de ces polymères sont fixées respectivement entre les deux extrémités (de préférence fixées sur la chaîne de façon symétrique) et aux deux extrémités d'une chaîne de petite taille, constitué de préférence d'une chaîne comportant 4 atomes qui sont de préférence 4 atomes de carbone.

Dans le cas d'une chaîne à 4 atomes de carbones, chaque atome est relié à une branche.

De tels polymères possèdent de préférence des terminaisons hybrides, plus préférentiellement encore des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl, une branche au moins dudit polymère à quatre branches (et de préférence au moins deux branches) étant susceptible (s) de donner lieu à une réticulation.

Le polymère à 4 branches est préférentiellement un polymère en étoile de type polyéther qui possède au moins quatre branches ayant des terminaisons contenant les fonctions suivantes : acrylate ou méthacrylate et alkoxy, allyloxy et/ou vinyloxy, dont au moins une, et de préférence dont au moins deux de ces fonctions sont actives pour permettre

une réticulation.

D'autres familles de polyéthers dont la masse moléculaire est supérieure ou égale à 30.000 sont avantageusement utilisées dans le cadre de la présente invention.

Selon un autre mode préférentiel de réalisation de la présente invention, le polymère à 4 branches est un de ceux définis dans les colonnes 1 et 2 du brevet américain US-A-6,190,804 (DKS), c'est-à-dire un polymère tétrafonctionnel de préférence à haut point moléculaire répondant à la formule (I) :

$$\begin{array}{ccc} R^1 & R^2 & R^3 \\ | & | & | \\ -(CH_2CHO)_m- & (CH_2CHO)_n-CO- & C{=}{=}CH_2 \end{array}$$

dans laquelle $R^1$ et $R^2$ représentent chacun un atome d'hydrogène ou un alkyl inférieur (de préférence de 1 à 7 atomes de carbones); $R^3$ représente un atome d'hydrogène ou un groupe méthyl; m et n représentent chacun un entier supérieur ou égal à 0; dans chaque chaîne à haut point moléculaire, $m+n > 35$; et chacun des groupes $R^1$, $R^2$, $R^3$ et chacun des paramètres m et n peuvent être identiques ou différents dans les 4 chaînes à haut point moléculaire.

Parmi ces polymères à quatre branches, ceux qui possèdent un poids moléculaire moyen compris entre 1000 et 1000000, plus préférentiellement encore ceux qui ont un poids moléculaire moyen variant de 5000 à 100000 sont particulièrement intéressants.

Selon un autre mode préférentiel, on retient les polyéthers de type étoile d'au moins quatre branches avec une terminaison hybride (acrylate ou méthacrylate et alkoxy, allyloxy, vinyloxy). Son voltage de stabilité est nettement supérieur à 4.

Également, les polymères vinyliques de type EG et plus particulièrement ceux décrits dans la demande de brevet EP-A-1249461 (DKS), sont d'un intérêt particulier comme matériau de protection. Particulièrement avantageux parmi ces polymères sont ceux dont le poids moléculaire moyen varie de 600 à 2500.

Des polymères de cette famille peuvent avantageusement être obtenus en faisant réagir l'oxyde d'éthylène et le propanol-1-époxy-2,3 avec le matériau de départ, ou en faisant réagir le propanol-1-époxy-2,3 avec l'éthylène glycol comme matériau de départ pour produire un composé polymère. Cette étape est suivie par l'introduction de groupes fonctionnels polymérisables et/ou non-polymérisables à chaque extrémité d'un squelette et des chaînes latérales dans le composé polymère résultant.

Les composés ayant un ou plusieurs résidus hydrogènes actifs et alkoxydes peuvent aussi être utilisés comme matériaux de départ.

Des exemples de résidus hydrogènes actifs pour le composé ayant un ou plusieurs résidus hydrogènes actifs, incluent le groupe des hydroxyles, ayant de préférence de 1 à 5 résidus hydrogènes actifs. Des exemples spécifiques des composés ayant un ou plusieurs résidus hydrogènes actifs incluent le monométhyléther de triéthylèneglycol, l'éthylèneglycol, la glycérine, la diglycérine, le pentaérythritol et leurs dérivés.

Des exemples spécifiques d'alkoxydes incluent aussi $CH_3ONa$, t-BuOK et leurs dérivés.

Les composés polymères polyéthers de l'invention ont l'unité de structure représentée par la formule (1) ainsi que l'unité de structure représentée par la formule (2) et/ou l'unité de structure représentée par la formule (3) ci-dessous. Le nombre d'unités de structure représentées par la formule (1) dans une molécule est de 1 à 22800, plus avantageusement de 5 à 11400, et plus avantageusement encore de 10 à 5700. Le nombre d'unités de structure de la formule (2) ou (3) (mais quand les deux sont incluses, c'est le nombre total) est de 1 à 13600, plus avantageusement de 5 à 6800, et plus avantageusement encore de 10 à 3400.

(1)

$$-CH_2CH_2O-$$

(2)

$$\begin{array}{l} \quad\quad\quad\ \ CH_2O- \\ \quad\quad\quad\quad\ | \\ -CH_2-CH \\ \quad\quad\quad\quad\ | \\ \quad\quad\quad\ \ O- \end{array}$$

(3)

$$\begin{array}{l} \ \ CH_2O- \\ \quad\ | \\ -CH \\ \quad\ | \\ \ \ CH_2O- \end{array}$$

Des exemples de groupes fonctionnels polymérisables introduits à chaque extrémité moléculaire incluent les résidus (méth)acrylates, les groupes allyls et les groupes vinyls, et des exemples de groupes fonctionnels non-polymérisables incluent les groupes alkyls ou les groupes fonctionnels comprenant des atomes de bore.
Comme les groupes alkyls ci-dessus, les groupes alkyls ayant de 1 à 6 atomes de carbones sont avantageux, ceux ayant de 1 à 4 atomes de carbones sont plus avantageux, et les groupes méthyles sont spécialement avantageux.
Des exemples de groupes fonctionnels comprenant des atomes de bore incluent ceux représentés par les formules suivantes (4) ou (5) :

(4)

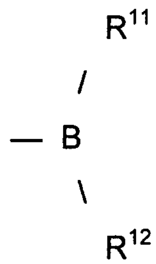

(5)

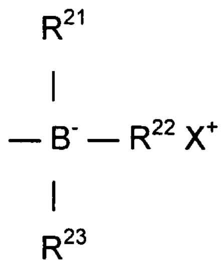

$R^{11}$ et $R^{12}$ dans la formule (4) et $R^{21}$, $R^{22}$, $R^{23}$ dans la formule (5) peuvent être identiques ou différents, et chacun représente un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique, -B($R^a$) ($R^b$), -OB($R^a$) ($R^b$) ou OSi($R^a$)($R^b$)($R^c$). ($R^a$), ($R^b$) et ($R^c$) représentent chacun un hydrogène, halogène, alkyle, alkoxy, aryle, alkenyle, alkynyle, aralkyle, cycloalkyle, cyano, hydroxyle, formyle, aryloxy, alkylthio, arylthio, acyloxy, sulfonyloxy, amino, alkylamino, arylamino, carbonamino, oxysulfonylamino, sulfonamide, oxycarbonylamino, ureide, acyle, oxycarbonyle, carbamoyle, sulfonyle, sulfinyle, oxysulfonyle, sulfamoyle, carboxylate, sulfonate, phosphonate, hétérocyclique ou dérivés de ceux-ci. $R^{11}$ et $R^{12}$ dans la formule (4) et $R^{21}$, $R^{22}$, $R^{23}$ dans la formule (5) peuvent être liés ensemble pour former un anneau, et l'anneau peut avoir des substituants. Chaque groupe peut aussi être substitué par des groupes substituables. De plus, $X^+$ dans la formule (5) représente un ion métallique alcalin, et est avantageusement un ion lithium.
Les extrémités des chaînes moléculaires dans le polymère polyéther peuvent toutes être des groupes fonctionnels polymérisables, des groupes fonctionnels non-polymérisables, ou peuvent inclure les deux.
Le poids moléculaire moyen (MW) de ce type de composé polymère polyéther n'est pas spécialement limité, mais il est habituellement d'environ 500 à 2 millions, et avantageusement d'environ 1000 à 1,5 millions.
Les polymères de ces familles préférentielles sont par ailleurs avantageusement choisis parmi les polymères qui sont réticulables par ultraviolet, infrarouge, traitement thermique et/ou faisceau d'électron ("EBeam").
La finalité d'un procédé de cobroyage est réalisée lorsque les agglomérats notamment de noir de carbone, sont dissous et que le conducteur électronique est dispersé de façon homogène avec le matériau actif, et qu'il arrive ainsi à un mélange intime.
La dispersion est considérée complète ou comme quasi complète lorsque la majorité des agglomérats sont séparés.
Il est apparu difficile de disperser de façon homogène les noirs de carbone dans une matrice d'un second matériau, à cause de la légèreté du matériau et de sa forme poudreuse (pulvérulente).
Contrairement à l'enseignement de l'art antérieur, il a été découvert de façon surprenante qu'une surface spécifique et qu'une absorption d'huile élevée rendent la dispersion des particules du mélange très difficile, et ce, en particulier lorsque des noirs sont mélangés avec des matériaux denses et/ou très visqueux.
Il a également été découvert que lorsque les noirs sont dispersés de façon hétérogène dans la cathode, non seulement les performances de la batterie sont détériorées, mais aussi la vitesse de production (de fabrication des électrodes) est également altérée.
De plus, dans ce type de mélange, les charges en matériau actif et en noir de carbone doivent être élevées, ce qui rend la tache d'épandre des électrodes uniformes encore plus laborieuse.
La bonne distribution de ces particules de noir de carbone dans le mélange pour épandage permet d'avoir une bonne conductivité volumique de la cathode.
La présente invention est relative notamment à de nouveaux matériaux qui améliorent sensiblement les performances des systèmes électrochimiques dans lesquels ils sont incorporés.

Dans le mélange homogène de particules actives et de conduction au sein du matériau de l'invention, il a été découvert qu'il est particulièrement avantageux que le matériau actif soit le plus proche possible des espèces de conduction afin que le parcours électronique soit assuré pour le maximum de particules de charge de la cathode (Figures 1A, 1B et 2A, 2B).

La préparation d'un mélange de particules cobroyées à sec dans le procédé de l'invention permet la production des films d'électrode utilisable dans les accumulateurs à électrolyte polymère de type ACEP (Accumulateur à Électrolyte Polymère). Ce procédé est particulièrement avantageux du point de vue économique pour la préparation des électrodes.

Selon un mode avantageux de réalisation de la présente invention, le cobroyé du procédé de l'invention est préparé à partir d'un mélange d'oxydes et d'un carbone conducteur présentant une faible absorption d'huile, une faible surface spécifique et une bonne conductivité électronique.

Ce type de carbones s'est révélé présenter des propriétés très avantageuses pour la préparation de solutions de polymères utilisables pour l'enduction.

La présente invention permet également de résoudre les problèmes rencontrés pendant la dispersion de particules de noir de carbone et d'oxyde dans une solution de polymères, et ce, en assurant une bonne conduction de l'électrode, une faible porosité et une bonne performance électrochimique.

Une des caractéristiques de la présente invention réside dans la mise à disposition d'un procédé de préparation d'un mélange cobroyé en présence d'un additif de conduction électronique particulier qui s'avère favorable à la dispersion dans un milieu liquide ou sec, dont les caractéristiques sont :

- une faible absorption d'huile;
- une faible surface spécifique; et
- une taille de particules monodispersées déterminée (Figure 6).

Il s'est avéré, de façon surprenante, que l'utilisation de ce type d'additif de conduction dans la préparation d'un cobroyé dans une solution polymère (Figures 2A, 2B), résulte en un mélange ayant des propriétés rhéologiques adéquates. La viscosité du mélange est plus contrôlable, de plus la quantité du solvant utilisé pour préparer le mélange du cobroyé est réduite et la mouillabilité des particules du cobroyé est beaucoup améliorée. De plus, le rapport massique matériau actif /polymère est augmenté.

Un aspect de la présente invention réside, selon un mode avantageux, dans un procédé de préparation d'un cobroyé à sec pour enduction, à base de mélange de particules solides de préférence d'un oxyde et d'au moins un additif de conduction. Le cobroyage à sec permet de réduire le temps de préparation des solutions pour enduction, de réduire la quantité de solvant utilisé ainsi que le coût de production. Les résultats obtenus ont montré que la préparation du cobroyé en présence du solvant augmente le problème de la solubilité de l'oxyde. Ce problème génère également des problèmes de perte de capacité de la batterie et limite sa vie calendaire.

L'oxyde est de préférence mélangé avec le noir de carbone dans un rapport massique variant entre 85/15 et 97/3, à l'aide de la mécanofusion (Hosokawa). Le temps de broyage varie entre 15 minutes et 3 heures. La puissance de rotation dépend du poids du matériau à mélanger. Le procédé est avantageusement réalisé avec une énergie constante. La puissance doit être ajustée en fonction du poids du cobroyé. À cette valeur de puissance, les précurseurs (oxyde et noir de carbone) se mélangent de façon homogène et défont les agglomérats, sans réduire la taille des particules. La température dans la chambre du mélange est contrôlée entre 20 et 30°C. En deuxième étape, le cobroyé obtenu est mélangé dans une solution d'un polymère salé ou non salé. Cette solution sert à enduire des films de cathode/anode sur des supports, par la méthode de Doctor Blade.

Le procédé à sec est avantageusement réalisé pour enrober des particules d'oxyde par l'additif de conduction, à sec, par mécanofusion. Les particules de l'oxyde ainsi que celles de l'additif seront désagglomérées par cette technique. Ensuite les particules légères "additif de conduction" sont attachées à la surface des particules de l'oxyde par attrition; la combinaison des deux forces centrifuge et de frottement dans les ensembles particules-particules et particules-paroi de la chambre permet d'obtenir des solutions solides intimes.

Selon un mode avantageux de réalisation de l'invention, l'additif de conduction utilisé pour la mise en oeuvre du cobroyé à sec est à base d'un carbone de type Denka black de la compagnie DENKA (Denki Kagaku Kogyo Kabushiki Kaisha, Japon). Ce carbone peut être sous forme non pressée ou pressée à différent taux de pressage 0 %, 50 %, 75 % ou 100%.

Selon un autre mode avantageux de réalisation, l'additif de conduction peut être un mélange du carbone Denka black et du graphite ou d'une fibre de carbone ou d'un autre conducteur électronique.

Ce procédé présente un intérêt particulier dans la préparation des films minces d'électrodes positives pour la batterie ACEP (Accumulateur à Électrolyte Polymère).

Il a également été identifié que l'efficacité du procédé à sec réside dans le fait qu'il permet aux particules fines du carbone de s'enrober à la surface des grosses particules, rendant la mouillabilité du cobroyé plus facile et la conductivité électronique de l'électrode plus homogène.

De façon inattendue, il a également été découvert dans le cadre de la présente invention qu'un recouvrement total des particules support doit de préférence être évité; les explications qui peuvent être avancés à ce stade de connaissance du phénomène sont que:

i) dès qu'un chemin électronique est créé à la surface de la particule du matériau actif, toute quantité du matériau conducteur rajoutée est en excès; en fait, le taux de recouvrement de la surface des particules de l'oxyde ne doit avantageusement pas dépasser le 50 %; et

ii) il faut assurer un mouillage suffisant des particules du matériau actif avec le polymère (liant), qui peut ou non contenir du sel, pour en assurer la conduction ionique.

Le noir de carbone avantageusement utilisé dans le cadre de la présente invention pour être attaché à la surface des particules support à base d'un matériau actif, ne contient pas de nanopores, comme il apparaît sur les Figures 5A et 5B, en tenant compte de l'échelle de mesure par MET (Microscope Électronique par Transmission). Cela lui confère une bonne facilité de dispersion dans la matrice polymère et diminue son pouvoir d'absorption du solvant. Concrètement, lorsque l'on réalise la préparation d'électrodes, à l'aide d'un mélange cobroyé de particules de l'invention et que l'on incorpore ce type de carbone à surface spécifique élevée et à faible porosité, il faut ajuster d'avantage la concentration du polymère/solvant. Ceci se fait par la réduction de la quantité de solvant.

Selon un autre mode avantageux de réalisation de la présente invention, la bonne dispersion de ce carbone permet d'obtenir des électrodes à très faibles porosités (1-5 %), ce qui représente un paramètre essentiel dans la technologie lithium polymère, contrairement à la technologie Li-ion où la porosité doit être maintenue autour de 30 % pour avoir l'accès de l'électrolyte liquide aux particules du matériau actif. La bonne dispersion de ce carbone dans la solution polymère permet d'avoir des électrodes plus capacitives, par le biais de l'augmentation du rapport oxyde/polymère. Les cathodes à base du cobroyé $LiV_3O_8$/noir de carbone (Denka) et du polymère P70 présentent des capacités qui sont supérieures de 12 à 20 % à celles obtenues avec un mélange de particules cobroyées avec du noir de Ketjen, sans respect d'un rapport de surface spécifique particulier qui s'est avéré nuire à l'obtention d'électrodes plus capacitives, à faible porosité.

Les cathodes comparables, préparées avec le noir de Ketjen selon les techniques de l'art antérieur (CA-A-2,140,456), présentent en outre une faible tenue mécanique et sont très poreuses.

Selon un autre mode avantageux, on peut augmenter la barrière technologique limite pour obtenir une cathode plus capacitive, par l'utilisation du polymère à 4 branches (de préférence de type Elexcel®) à la place du P70. Le mélange cobroyé $LiV_3O_8$/noir de carbone (Denka) est alors dispersé dans une solution du polymère 4 branches. La bonne mouillabilité du polymère à 4 banches, la bonne dispersion du noir de carbone (Denka), ainsi que la faible absorption de solvant permet d'avoir des électrodes plus capacitives.

On retiendra que l'on utilise avantageusement pour la préparation des mélanges polymères de l'invention, des polymères non conducteur électronique ayant au moins 3 branches, et plus préférentiellement encore de type 4 branches tels ceux décrits dans la demande internationale WO 03/063287 (et plus particulièrement en pages 5, 8 et 9), déposée au nom d'Hydro-Québec, ainsi que dans les colonnes 1 et 2 du brevet américain US-A-6,190,804 et qui présentent des terminaisons hybrides acrylates (de préférence méthacrylates) et alkoxy (de préférence alkoxy avec de 1 à 8 atomes de carbone, plus préférentiellement encore les groupements méthoxy ou éthoxy), ou encore vinyle.

Selon un autre mode avantageux, en utilisant un noir de carbone à faible absorption de solvant, dans la préparation électrodes, des taux de vanadium solubilisés réduits ont été obtenus, d'une part par la préparation du mélange cobroyé à sec et, d'autre part, par la réduction de la quantité du solvant.

EXEMPLES

Les exemples suivants sont donnés à titre d'exemple seulement et ne sauraient être considérés comme représentant une quelconque limitation de l'invention.

<u>Exemple comparatif 1</u> - cobroyé avec carbone Ketjen et polymère polyéther avec un MW de 70.000 (P70)

7,2 grammes de particules de $LiV_3O_8$ d'une taille moyenne de 2 $\mu$m et 0,38 grammes de particules de carbone Ketjen d'une taille moyenne de 30 nm sont mélangés à sec par mécanofusion pendant 45 minutes. Le cobroyé $LiV_3O_8$-carbone ainsi obtenu est mélangé avec 3,25 grammes du polymère P70 et 0,71 grammes de particules de LiTFSI, auxquels on ajoute 29,4 ml d'acétonitrile; ce mélange est introduit dans un récipient métallique dont 1/3 en volume est occupé par la solution, 1/3 par des billes d'acier d'un diamètre de 6,34 mm et 1/3 du volume est libre. La dispersion est obtenue par HEBM, pendant 30 minutes, à 25°C.

La solution est épandue sur un collecteur de courant en aluminium par mise en oeuvre de la méthode du Doctor Blade. L'électrode est séchée sous vide pendant 24 heures, L'électrode obtenue présente une épaisseur de 45 micromètres. La cathode contient à sa surface des grumeaux, signe de la non-homogénéité de la cathode. La porosité de la cathode est de 30 %. La cathode présente une capacité de 5,5 mAh/cm$^2$.

Exemple 2 - cobroyé avec carbone Denka et polymère P70

7,2 grammes de particules de $LiV_3O_8$ d'une taille moyenne de 2 μm et 0,38 grammes de particules de carbone Denka d'une taille moyenne de 35 nm sont mélangés à sec par mécanofusion pendant 45 minutes. Le cobroyé $LiV_3O_8$-carbone ainsi obtenu est mélangé avec 3,25 grammes de polymère P70 et 0,71 grammes de LiTFSI, auxquels on ajoute 29,4 ml d'acétonitrile; ce mélange est introduit dans un récipient métallique dont 1/3 en volume est occupé par la solution, 1/3 par des billes d'acier d'un diamètre de 6,34 mm et 1/3 du volume est libre. La dispersion est obtenue par HEBM, pendant 30 minutes, à 25°C.

La solution est épandue sur un collecteur de courant en aluminium par mise en oeuvre de la méthode du Doctor Blade. L'électrode est séchée sous vide pendant 24 heures, L'électrode obtenue présente une épaisseur de 44,5 micromètres. La cathode est lisse, ne contient aucun défaut, cependant elle est moins capacitive, sa capacité se situe à 2,6 mAh/cm$^2$.

Ceci s'explique par la concentration trop diluée du mélange cobroyé-solution polymère et par le fait d'utiliser ce carbone à faible absorption de solvant. Donc le mélange de cathode se trouve dilué. Un ajustement de la concentration s'impose.

Exemple 3 - cobroyé avec carbone Denka et graphite

14,15 grammes de particules de $LiV_3O_8$ d'une taille de 2 μm, 0,47 grammes de particules de carbone Denka d'une taille de 35 nm et 0,47 gramme de graphite naturel sont mélangés à sec par mécanofusion pendant 45 minutes. Le cobroyé $LiV_3O_8$-carbone-graphite ainsi obtenu est mélangé avec 5,0 grammes de polymère P70 et 1,0 gramme de LiTFSI, auxquels on ajoute 19,4 ml d'acétonitrile; ce mélange est introduit dans un récipient métallique dont 1/3 en volume est occupé par la solution, 1/3 par des billes d'acier d'un volume de 6,34 mm et 1/3 du volume est libre. La dispersion est obtenue par HEBM, pendant 30 minutes, à 25°C.

La solution est épandue sur un collecteur de courant en aluminium par mise en oeuvre de la méthode du Doctor Blade. L'électrode est séchée sous vide pendant 24 heures. L'électrode obtenue présente une épaisseur de 44 micromètres. La cathode est lisse et ne contient aucun défaut. Elle présente en outre une très bonne capacité de 5,2 mAh/cm$^2$. Ces résultats mettent en évidence le gain technologique obtenu dans la production de beaux films minces homogènes, tout en réduisant la quantité de solvant nécessaire. La porosité de la cathode est réduite de 87 % comparativement à celle obtenue dans l'exemple 1 à l'aide du mélange cobroyé avec le carbone Ketjen.

Exemple 4 - cobroyé avec carbone Denka et polymère 4B - augmentation de la capacité de la cathode

59,2 grammes de particules de $LiV_3O_8$ d'une taille moyenne de 2 μm et 3,1 grammes de particules de carbone Denka d'une taille moyenne de 35 nm sont mélangés à sec par mécanofusion pendant 45 minutes. Le cobroyé $LiV_3O_8$-carbone ainsi obtenu est mélangé avec 5,0 grammes de polymère 4B et 1,0 gramme de particules de LiTFSI, auxquels on ajoute 19,4 ml d'acétonitrile; ce mélange est introduit dans un récipient métallique dont 1/3 en volume est occupé par la solution, 1/3 par des billes d'acier d'un diamètre de 6,34 mm et 1/3 du volume est libre. La dispersion est obtenue par HEBM, pendant 30 minutes, à 25°C.

La solution est épandue sur un collecteur de courant en aluminium par mise en oeuvre de la méthode du Doctor Blade. L'électrode est séchée sous vide pendant 24 heures, L'électrode obtenue présente une épaisseur de 52 micromètres. La cathode est lisse, elle ne contient aucun défaut et elle a une très bonne capacité qui est de 5,6 mAh/cm$^2$. La porosité de la cathode est évaluée à 8 %. Ceci qui confirme le gain technologique par la production des belles cathodes plus capacitives, homogènes et en réduisant la quantité de solvant. Le pourcentage d'oxyde dans la cathode est augmenté de 18 % grâce à la bonne dispersion du carbone Denka et à la bonne mouillabilité du polymère 4B (Elexcel® TA 210).

Exemple 5 - cobroyé avec carbone Denka et polymère EG 2500

7,3 grammes de particules de $LiV_3O_8$ d'une taille moyenne de 2 μm et 0,375 grammes de particules de carbone Denka d'une taille moyenne de 35 nanomètres sont mélangés à sec par mécanofusion pendant 45 minutes. Le cobroyé $LiV_3O_8$-carbon ainsi obtenu est mélangé avec 3,23 grammes de polymère EG2500 et 0,70 gramme de particules de LiTFSI, auxquels on ajoute 29,4 ml d'acétonitrile; ce mélange est introduit dans un récipient métallique dont 1/3 en volume est occupé par la solution, 1/3 par des billes d'acier d'un diamètre de 6,34 mm et 1/3 du volume est libre. La dispersion est obtenue par HEBM, pendant 30 minutes, à 25°C.

La solution est épandue sur un collecteur de courant en aluminium par mise en oeuvre de la méthode du Doctor Blade. L'électrode est séchée sous vide pendant 24 heures. L'électrode ainsi obtenue présente une épaisseur de 47,5 micromètres. La cathode est lisse, ne contient aucun défaut et présente cependant une bonne capacité de 5,35 mAh/$cm^2$. La porosité de la cathode est de 3 %.

Exemple 6 - cobroyé $LiFePO_4$ avec carbone Denka et polymère

78 grammes de particules de $LiFePO_4$ d'une taille moyenne de 2 $\mu$m et 0,45 grammes de particules de carbone Denka d'une taille moyenne de 35 nm sont mélangés à sec, par mécanofusion, pendant 45 minutes. Ce cobroyé $LiFePO_4$-carbone est mélangé avec 3,25 grammes du polymère 4B (Elexcel® TA210) et 0,9 gramme de particules de LiTFSI, auxquels on ajoute 45 ml d'acétonitrile; ce mélange est introduit dans un récipient métallique dont 1/3 en volume est rempli par la solution de ce mélange, 1/3 de billes d'acier d'un diamètre de 6,34 mm et 1/3 du volume reste libre. L'enrobage est obtenu par HEBM, pendant 30 minutes à 25°C.

La solution est épandue sur un collecteur de courant en aluminium, par mise en oeuvre de la méthode du Doctor Blade, l'électrode $LiFePO_4$-4B est séchée sous vide pendant 24 heures, l'électrode a une épaisseur de 45 micromètres, avec une capacité de 4,57 mAh/$cm^2$. La porosité de la cathode est de 7 %.

Les Figures 3A et 3B sont des vues au microscope électronique à balayage (MEB) du conducteur électronique ($M_1$), le carbone Denka, utilisé dans les exemples 2-6.

Les Figures 4A et 4B sont des vues au microscope électronique à balayage (MEB) de particules du conducteur électronique ($M_1$) avec détermination de la taille des particules.

La Figure 7 est une vue au microscope électronique à balayage d'un mélange, selon l'exemple 2, d'un cobroyé à sec de $LiV_3O_8$ avec du carbone Denka obtenu à sec par mécanofusion.

De manière conclusive, la préparation d'électrodes à partir de mélanges de particules du matériau de l'invention présente un gain économique et environnemental important. Ainsi à titre d'exemple, dans le cas de l'utilisation d'un carbone de type Denka black pressé à 50-100 %, ce carbone est choisi dans la gamme des produits de noir d'acétylène, la quantité du solvant nécessaire pour faire des solutions pâteuses de "coating" est réduite par un facteur de 15 %, comparativement à un carbone conducteur standard de type Ketjen de la compagnie (Akzo Nobel). De plus, il faut considérer les coûts de recyclage des solvants utilisés.

Par contre, lors de la préparation des électrodes à partir d'un mélange cobroyé et en utilisant le noir de Shawinigan, avec une conduction électronique acceptable, il faut augmenter le taux de ce dernier dans le mélange de l'invention et par rapport au matériau actif, à une valeur au moins double du carbone Denka.

Un autre aspect économique consiste à augmenter le pourcentage du matériau actif dans la composition dans l'électrode jusqu'à 20 %, ce qui fait augmenter le contenu énergétique de la batterie polymère.

Grâce à la sélection d'un matériau de conduction, i.e. d'un noir de carbone, avec des caractéristiques de porosité et de surface spécifique particulière, ainsi que par la sélection d'un type particulier de polymères, i.e. de polymères à 4 branches, des épandages peuvent être réalisés avec un taux de matériau actif plus élevé. Et ainsi le contenu énergique peut augmenter jusqu'à 25-30 %.

Les électrodes des piles à combustion nécessitent des électrodes plus épaisses.

L'utilisation des matériaux de l'invention, notamment ceux contenant dans le mélanges de particules des carbones ayant des caractéristiques particulières, dans les piles à combustion, améliore sensiblement les performances et réduit le coût de ces systèmes électrochimiques.

Bien que la présente invention ait été décrite à l'aide de mises en oeuvre spécifiques, il est entendu que plusieurs variations et modifications peuvent se greffer auxdites mises en oeuvre, et la présente invention vise à couvrir de telles modifications, usages ou adaptations de la présente invention suivant en général, les principes de l'invention et incluant toute variation de la présente divulgation qui deviendra connue ou conventionnelle dans le champ d'activité dans lequel se retrouve la présente invention, et qui peut s'appliquer aux éléments essentiels mentionnés ci-haut.

## Revendications

1. Matériau constitué par au moins un mélange de particules dispersé dans au moins un polymère, **caractérisé en ce que** le mélange de particules est constitué par des particules ayant une distribution granulométrique d50 comprise entre 0,1 et 50 $\mu$m, lesdites particules étant constituées par un support à base d'au moins un matériau actif $M_1$ de taille moyenne $T_1$ et de surface spécifique $S_1$ sur lequel sont attachées, par des liaisons physiques et/ou chimiques, des particules d'au moins un matériau conducteur électronique $M_2$ de taille moyenne $T_2$ et de surface spécifique $S_2$, ledit mélange de particules étant tel que :

   - le rapport des tailles moyennes $T_1/T_2$ est compris entre 5 et 10000 ;

- le rapport des surfaces spécifiques $S_1/S_2$ est compris entre 1/300 et 1/2 ;
- et la surface spécifique $S_2$ du matériau conducteur électronique $M_2$ est inférieure à 200 $m^2/g$ ;

ledit matériau présentant une porosité inférieure à 20 %.

**2.** Matériau selon la revendication 1, dans lequel les particules du matériau actif $M_1$ sont recouvertes pour 1 à 50 % de leur surface par le matériau conducteur électronique $M_2$.

**3.** Matériau selon la revendication 1, dans lequel le matériau conducteur électronique $M_2$ présente une résistivité comprise entre 0,03 et 0,2 Ω.cm.

**4.** Matériau selon l'une quelconque des revendications 1 à 3, dans lequel le matériau conducteur électronique $M_2$ présente une surface spécifique $S_2$ qui est comprise entre 20 et 100 $m^2/g$.

**5.** Matériau selon l'une quelconque des revendications 1 à 4, dans lequel les particules du matériau conducteur électronique $M_2$ constituent un mélange homogène, et **caractérisé par** une distribution monodispersée dont le pic est compris entre 1 nm et 100 nm.

**6.** Matériau selon l'une quelconque des revendications 1 à 5, dans lequel le matériau actif $M_1$ présente une surface spécifique $S_1$ qui est comprise entre 1 et 10 $m^2/g$.

**7.** Matériau selon l'une quelconque des revendications 1 à 6, **caractérisé en ce que** le matériau actif $M_1$ est choisi dans le groupe constitué par :

a) les oxydes de métaux de transition, de préférence ceux choisis dans le groupe constitué par $LiV_3O_8$, $LiV_6O_{13}$, $V_6O_{13}$, $LiV_2O_5$ $V_2O_5$, $V_2O_5$ lithié, $LiMn_2O_4$, et $LiCoO_2$;
b) les phosphates de transition, de préférence ceux choisis dans le groupe constitué par $LiFePO_4$ et $LiMn_x$-$Fe_{(1-x)}PO_4$ ($x \leq 1$);
c) les silicates des métaux de transition, de préférence les silicates de fer, et plus préférentiellement ceux choisis dans le groupe constitué par $Li_2FeSiO_4$ et $Li_2GeSiO_4$; et
d) un mélange d'au moins deux entités chimiques définies dans les points a) à c) précédents.

**8.** Matériau selon l'une quelconque des revendications 1 à 7, comprenant plus d'un matériau conducteur électronique $M_2$, l'un au moins étant choisi dans le groupe constitué par les noirs de carbone, les graphites, les fibres de carbone, et les mélanges d'au moins deux de ces derniers.

**9.** Matériau selon l'une quelconque des revendications 1 à 8, **caractérisé en ce que** le polymère est un polymère à 3 branches ou un polymère à 4 branches, choisis dans le groupe constitué par les polymères de type EG et/ou leurs mélanges, ainsi que dans le groupe des polymères salés correspondants.

**10.** Matériau selon l'une quelconque des revendications 1 à 9, **caractérisé en ce que** la quantité de polymère représente de 10 à 50% de la quantité totale de matériau conducteur électronique $M_2$ et de matériau actif $M_1$.

**11.** Procédé de préparation d'un matériau selon l'une quelconque des revendications 1 à 10, comprenant les étapes suivantes :

- préparation d'un mélange par cobroyage à sec par mécanofusion, dans un rapport massique $1\% \leq M_2/M_1 \leq 15\ \%$ d'un matériau actif $M_1$ ayant une surface spécifique $S_1$ et d'un matériau conducteur électronique $M_2$, ayant une surface spécifique $S_2$ telle que $S_1/S_2$ est compris entre 1/300 et 1/2, le rapport de la taille des particules $T_1/T_2$ étant compris entre 5 et 10000 ;

ledit mélange étant homogène et avec un pourcentage massique d'agglomérats représentant moins de 15 % ; et

- dispersion du cobroyé dispersé dans une solution de polymère, ladite solution de polymère comprenant 5 à 35% d'un ou de plusieurs polymères et 65 à 95% d'un solvant, ou 50% d'un ou de plusieurs polymères et 50% d'un solvant, ledit solvant étant choisi dans le groupe des solvants organiques ou des mélanges d'au moins deux solvants organiques choisis dans le groupe constitué par les solvants non polaires aliphatiques ou cycloaliphatiques.

**12.** Procédé selon la revendication 11, dans lequel le cobroyage est réalisé à une température comprise entre 0 et 60°C, et avec un apport énergétique qui est compris entre 0,1 kWh et 1,5 kWh par kg de poudre.

**13.** Procédé selon la revendication 11 ou 12, dans lequel le cobroyage s'effectue en présence d'un gaz inerte.

**14.** Procédé selon l'une quelconque des revendications 11 à 13, dans lequel le cobroyage s'effectue pendant une durée variant de 5 à 180 minutes.

**15.** Electrode pour un dispositif électrochimique, **caractérisée en ce qu'**elle comprend un matériau polymère selon l'une quelconque des revendications 1 à 10, ledit dispositif électrochimique étant de type batterie polymère ou de type Accumulateur à Électrolyte Polymère pour un mélange polymère sec.

## Patentansprüche

**1.** Material, umfassend wenigstens eine Mischung von in wenigstens einem Polymer verteilten Partikeln, **dadurch gekennzeichnet, dass** die Mischung von Partikeln aus Partikeln mit einer Partikelgrößenverteilung d50 von zwischen 0,1 und 50 µm besteht, wobei die Partikel aus einem Trägerstoff ausgebildet sind, der auf wenigstens einem Aktivmaterial $M_1$ mit der Durchschnittsgröße $T_1$ und der spezifischen Oberfläche $S_1$ basiert, an welches über physikalische und/oder chemische Bindungen Partikel aus wenigstens einem stromleitfähigen Material $M_2$ mit der Durchschnittsgröße $T_2$ und der spezifischen Oberfläche $S_2$ gebunden sind, wobei die Mischung der Partikel so beschaffen ist, dass:

- das Verhältnis der Durchschnittgrößen $T_1/T_2$ zwischen 5 und 10.000 beträgt;
- das Verhältnis der spezifischen Oberflächen $S_1/S_2$ zwischen 1/300 und 1/2 beträgt;
- und die spezifische Oberfläche $S_2$ des stromleifähigen Materials $M_2$ weniger als 200 $m^2/g$ beträgt;

wobei das Material eine Porosität von weniger als 20 % aufweist.

**2.** Material nach Anspruch 1, wobei die Partikel des Aktivmaterials $M_1$ über 1 bis 50 % ihrer Oberfläche mit dem stromleitfähigen Material $M_2$ beschichtet sind.

**3.** Material nach Anspruch 1, wobei das stromleitfähige Material $M_2$ eine Widerstandsgröße zwischen 0,03 und 0,2 $\Omega \cdot cm$ aufweist.

**4.** Material nach einem der Ansprüche 1 bis 3, wobei das stromleitfähige Material $M_2$ eine spezifischen Oberfläche $S_2$ aufweist, die zwischen 20 und 100 $m^2/g$ beträgt.

**5.** Material nach einem der Ansprüche 1 bis 4, wobei die Partikel des stromleitfähigen Materials $M_2$ eine homogene Mischung bilden und **gekennzeichnet sind durch** eine monodisperse Verteilung, deren Spitze zwischen 1 nm und 100 nm liegt.

**6.** Material nach einem der Ansprüche 1 bis 5, wobei das Aktivmaterial $M_1$ eine spezifische Oberfläche $S_1$ aufweist, die zwischen 1 und 10 $m^2/g$ beträgt.

**7.** Material nach einem der Ansprüche 1 bis 6, **dadurch gekennzeichnet, dass** das Aktivmaterial $M_1$ aus der Gruppe bestehend aus Folgenden ausgewählt ist:

a) Übergangsmetalloxiden, bevorzugt den aus der aus $LiV_3O_8$, $LiV_6O_{13}$, $V_6O_{13}$, $LiV_2O_5$ $V_2O_5$, lithiiertem $V_2O_5$, $LiMn_2O_4$ und $LiCoO_2$ bestehenden Gruppe ausgewählten;
b) Übergangsphosphaten, bevorzugt den aus der aus $LiFePO_4$ und $LiMn_xFe_{(1-x)}PO_4$ ($x \leq 1$) bestehenden Gruppe ausgewählten;
c) Übergangsmetallsilikaten, bevorzugt Eisensilikaten, und bevorzugter den aus der aus $Li_2FeSiO_4$ und $Li_2GeSiO_4$ bestehenden Gruppe ausgewählten; und
d) einer Mischung von wenigstens zwei in den obenstehenden Punkten a) bis c) definierten chemischen Einheiten.

**8.** Material nach einem der Ansprüche 1 bis 7, umfassend mehr als ein stromleitfähiges Material $M_2$, von denen

wenigstens eines aus der aus Rußen, Graphiten, Kohlenstofffasern und Mischungen von wenigstens zwei davon bestehenden Gruppe ausgewählt ist.

**9.** Material nach einem der Ansprüche 1 bis 8, **dadurch gekennzeichnet, dass** das Polymer ein 3-fach verzweigtes Polymer oder ein 4-fach verzweigtes Polymer ist, ausgewählt aus der aus Polymeren des EG-Typs und/oder Gemischen davon bestehenden Gruppe, sowie in der Gruppe der entsprechenden versalzenen Polymere.

**10.** Material nach einem der Ansprüche 1 bis 9, **dadurch gekennzeichnet, dass** die Menge von Polymer von 10 % bis 50 % der Gesamtmenge des stromleitfähigen Materials $M_2$ und des Aktivmaterials $M_1$ darstellt.

**11.** Verfahren zum Herstellen eines Materials nach einem der Ansprüche 1 bis 10, umfassend die folgenden Schritte:

- Herstellung einer Mischung durch trockenes Mitmahlen durch Mechanofusion eines Masseverhältnisses von 1 % $\leq M_2/M_1 \leq$ 15% eines Aktivmaterials $M_1$ mit einer spezifischen Oberfläche $S_1$ und eines stromleitfähigen Materials $M_2$ mit einer spezifischen Oberfläche $S_2$, so dass $S_1/S_2$ zwischen 1/300 und 1/2 liegt, wobei das Verhältnis der Durchschnittsgrößen $T_1/T_2$ zwischen 5 und 10.000 beträgt;

wobei die Mischung homogen ist und einen Gewichtsprozentanteil an Agglomeraten aufweist, der weniger als 15 % darstellt; und

- Dispersion des mitgemahlenen Materials in einer Polymerlösung, wobei die Polymerlösung 5 % bis 35 % eines oder mehrerer Polymere und 65% bis 95 % eines Lösungsmittels umfasst, oder 50 % eines oder mehrerer Polymere und 50 % eines Lösungsmittels, wobei das Lösungsmittel aus der Gruppe aus organischen Lösungsmitteln oder Mischungen aus wenigstens zwei organischen Lösungsmitteln ausgewählt ist, die aus der aus nichtpolaren aliphatischen oder cycloaliphatischen Lösungsmitteln bestehenden Gruppe ausgewählt sind.

**12.** Verfahren nach Anspruch 11, wobei das Mitmahlen bei einer Temperatur zwischen 0 und 60 °C und mit einem Energieeintrag, der zwischen 0,1 kWh und 1,5 kWh pro kg Pulver beträgt, ausgeführt wird.

**13.** Verfahren nach Anspruch 11 oder 12, wobei das Mitmahlen in Gegenwart eines Inertgases durchgeführt wird.

**14.** Verfahren nach einem der Ansprüche 11 bis 13, wobei das Mitmahlen während eines Zeitraums ausgeführt wird, der von 5 bis 180 Minuten reicht.

**15.** Elektrode für eine elektrochemische Vorrichtung, **dadurch gekennzeichnet, dass** sie ein Polymermaterial nach einem der Ansprüche 1 bis 10 umfasst, wobei die elektrochemische Vorrichtung vom Typ der Polymerbatterie ist oder vom Typ der wiederaufladbaren Polymerelektrolytbatterie für eine trockene Polymermischung ist.

## Claims

**1.** A material comprising at least one mixture of particles distributed in at least one polymer, **characterized in that** the mixture of particles is consists of particles having a particle size distribution d50 of between 0.1 and 50 µm, said particles being formed of a carrier based on at least one active material $M_1$ of average size $T_1$ and of specific surface area $S_1$, to which are attached, via physical and/or chemical bonds, particles of at least one electronically conductive material $M_2$ of average size $T_2$ and of specific surface area $S_2$, said mixture of particles being such that:

- the average size ratio $T_1/T_2$ is between 5 and 10000;
- the specific surface area ratio $S_1/S_2$ is between 1/300 and 1/2;
- and the specific surface area $S_2$ of the electronically conductive material $M_2$ is less than 200 $m^2/g$;

said material having a porosity of less than 20%.

**2.** The material according to claim 1, wherein the particles of the active material $M_1$, are coated with the electronically conductive material $M_2$ over 1 to 50% of their surface.

**3.** The material according to claim 1, wherein the electronically conductive material $M_2$ has a resistivity of between 0.03 and 0.2 Ω·cm.

4. The material according to any one of claims 1 to 3, wherein the electronically conductive material $M_2$ has a specific surface area $S_2$ which is between 20 and 100 $m^2/g$.

5. The material according to any one of claims 1 to 4, wherein the particles of the electronically conductive material $M_2$ form a homogeneous mixture and, **characterized by** a monodisperse distribution, the peak of which is between 1 nm and 100 nm.

6. The material according to any one of claims 1 to 5, wherein the active material $M_1$ has a specific surface area $S_1$, which is between 1 and 10 $m^2/g$.

7. The material according to any one of claims 1 to 6, **characterized in that** the active material $M_1$ is selected from the group consisting of:

   a) transition metal oxides, preferably those selected from the group consisting of $LiV_3O_8$, $LiV_6O_{13}$, $V_6O_{13}$, $LiV_2O_5$ $V_2O_5$, lithiated $V_2O_5$, $LiMn_2O_4$, and $LiCoO_2$;
   b) transition phosphates, preferably those selected from the group consisting of $LiFePO_4$ and $LiMn_xFe_{(1-x)}PO_4$ ($x \leq 1$);
   c) transition metal silicates, preferably iron silicates, and more preferably those selected from the group consisting of $Li_2FeSiO_4$ and $Li_2GeSiO_4$; and
   d) a mixture of at least two chemical entities defined in the above points a) to c).

8. The material according to any one of claims 1 to 7, comprising more than one electronically conductive material $M_2$, at least one of which being selected from the group consisting of carbon blacks, graphites, carbon fibers, and mixtures of at least two thereof.

9. The material according to any one of claims 1 to 8, **characterized in that** the polymer is a 3-branched polymer or a 4-branched polymer selected from the group consisting of polymers of EG type and/or blends thereof, as well as in the group of the corresponding salified polymers.

10. The material according to any one of claims 1 to 9, **characterized in that** the amount of polymer represents from 10% to 50% of the total amount of electronically conductive material $M_2$ and of active material $M_1$.

11. A method for preparing a material according to any one of claims 1 to 10, comprising the following steps:

   - preparation of a mixture by dry co-grinding by mechanofusion of a mass ratio of $1\% \leq M_2/M_1 \leq 15\ \%$ of an active material $M_1$ having a specific surface area $S_1$ and an electronically conductive material $M_2$ having a specific surface area $S_2$ such that $S_1/S_2$ is between 1/300 and 1/2, the average size ratio $T_1/T_2$ being between 5 and 10,000;

   said mixture being homogenous and with a percentage by weight of agglomerates representing less than 15 % ; and

   - dispersion of the co-ground material in a polymer solution, said polymer solution comprising 5% to 35% of one or more polymers and 65% to 95% of a solvent, or 50% of one or more polymers and 50% of a solvent, said solvent being selected from the group of organic solvents or mixtures of at least two organic solvents selected from the group consisting of nonpolar aliphatic or cycloaliphatic solvents.

12. The method according to claim 11, wherein the co-grinding is carried out at a temperature of between 0 and 60° C, with an energy input which is between 0.1 kWh and 1.5 kWh per kg of powder.

13. The method according to claim 11 or 12, wherein the co-grinding is carried out in the presence of an inert gas.

14. The method according to any one of claims 11 to 13, wherein the co-grinding is carried out for a period of time ranging from 5 to 180 minutes.

15. Electrode for an electrochemical device, **characterized in that** it comprises a polymer material according to any one of claims 1 to 10, said electrochemical device being of the polymer battery type or being of the polymer electrolyte rechargeable battery type for a dry polymer mixture.

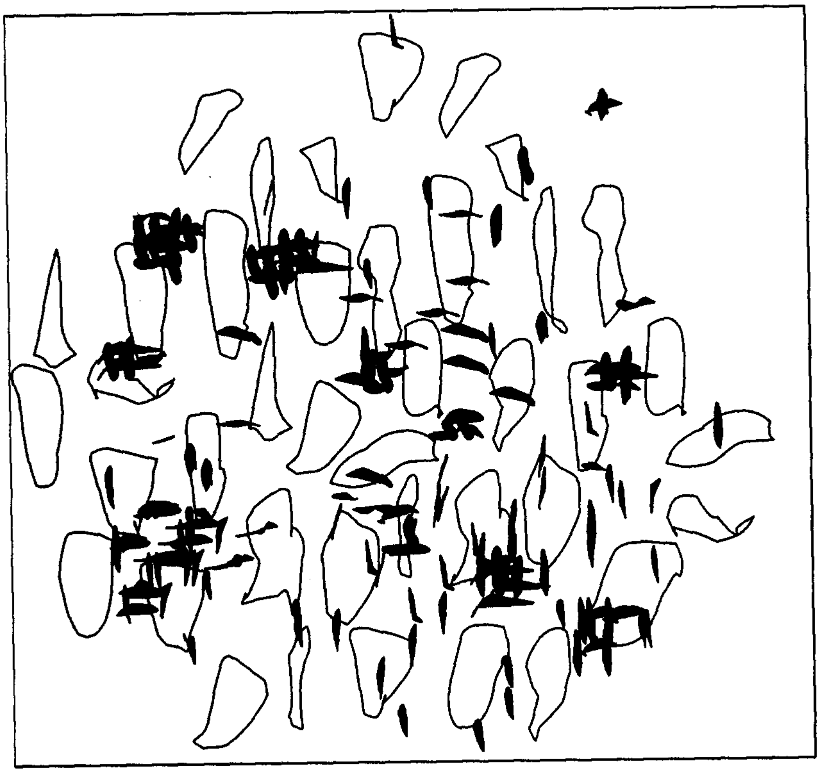

Agglomérat

FIG. 1B

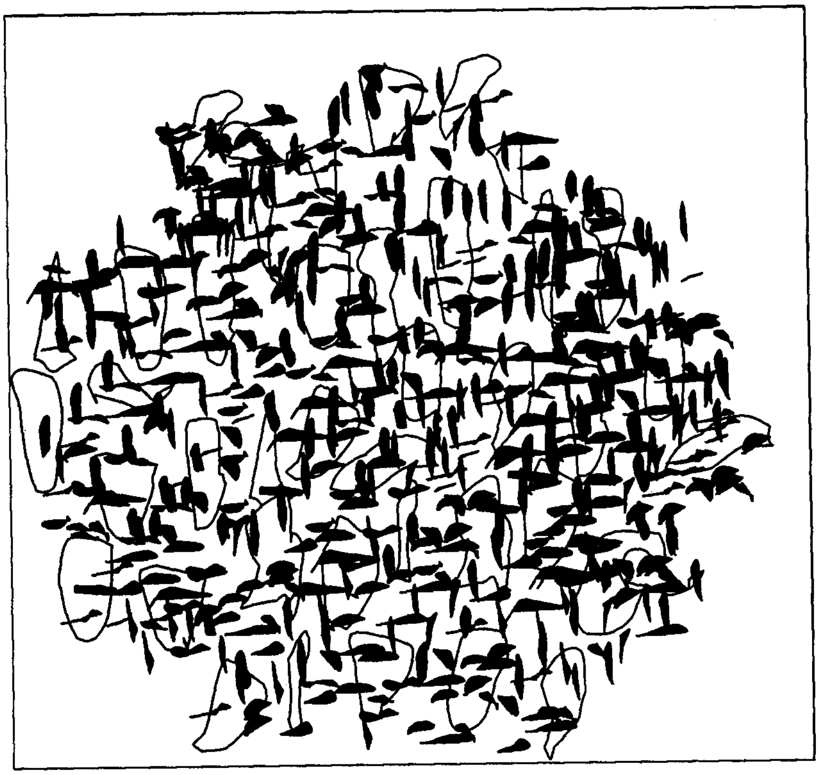

Matériau actif

Conducteur électronique

FIG. 1A

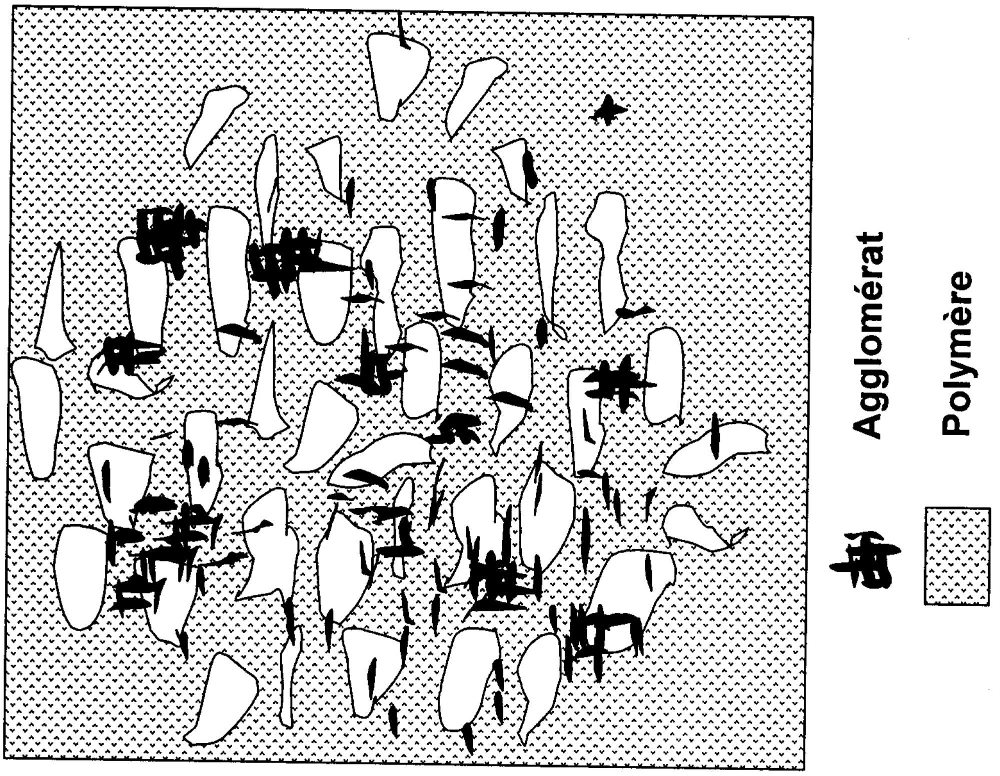
Agglomérat
Polymère

FIG. 2B

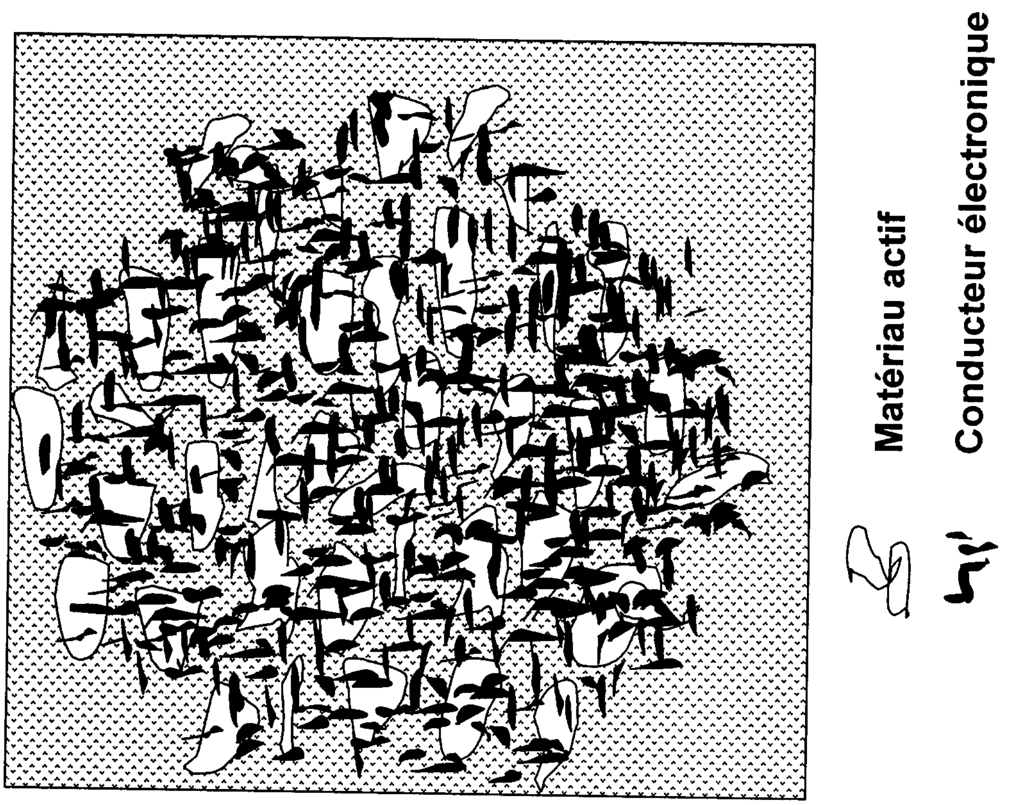
Matériau actif
Conducteur électronique

FIG. 2A

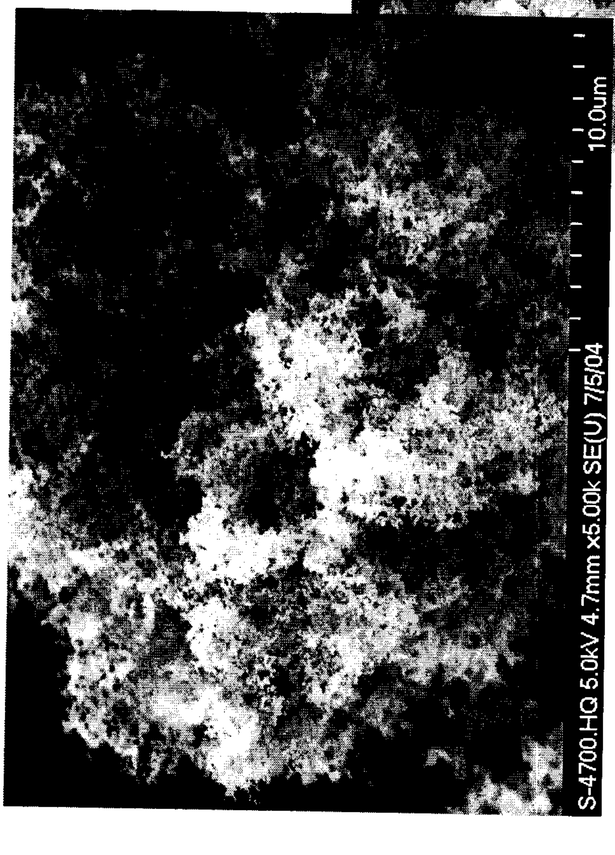
S-4700.HQ 5.0kV 4.7mm x5.00k SE(U) 7/5/04
10.0um

FIG. 3A

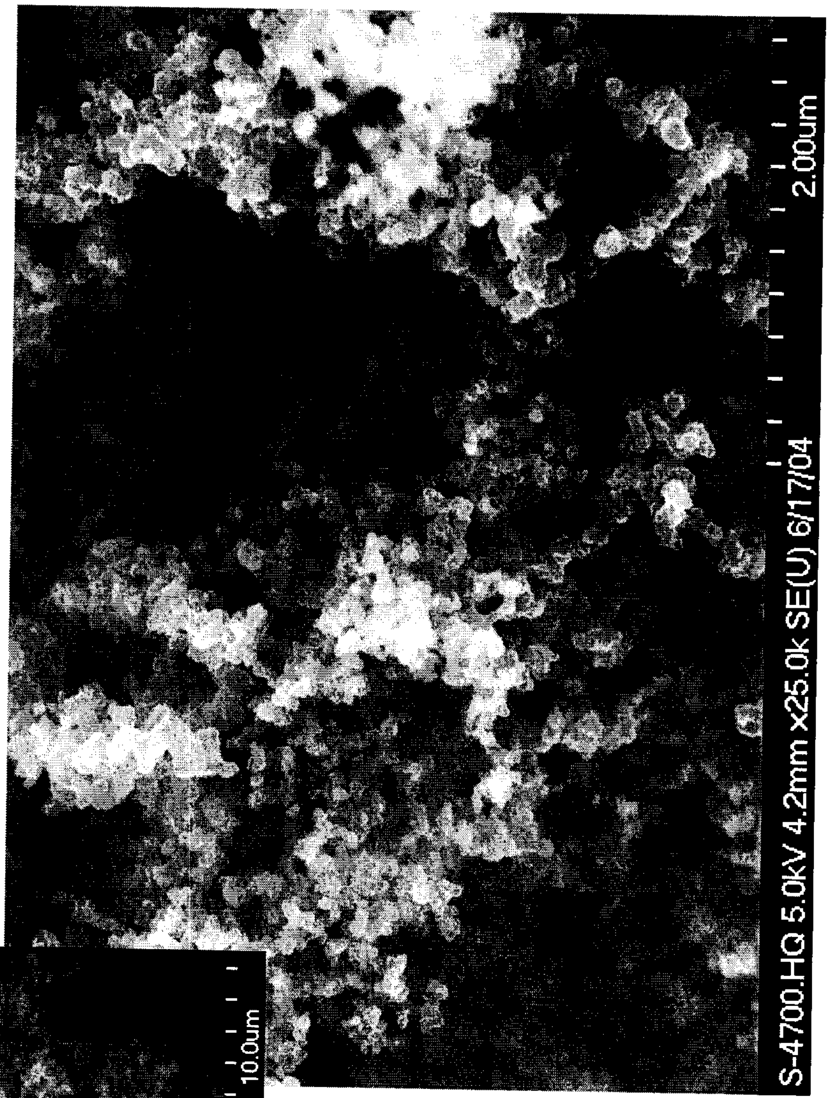
S-4700.HQ 5.0kV 4.2mm x25.0k SE(U) 6/17/04
2.00um

FIG. 3B

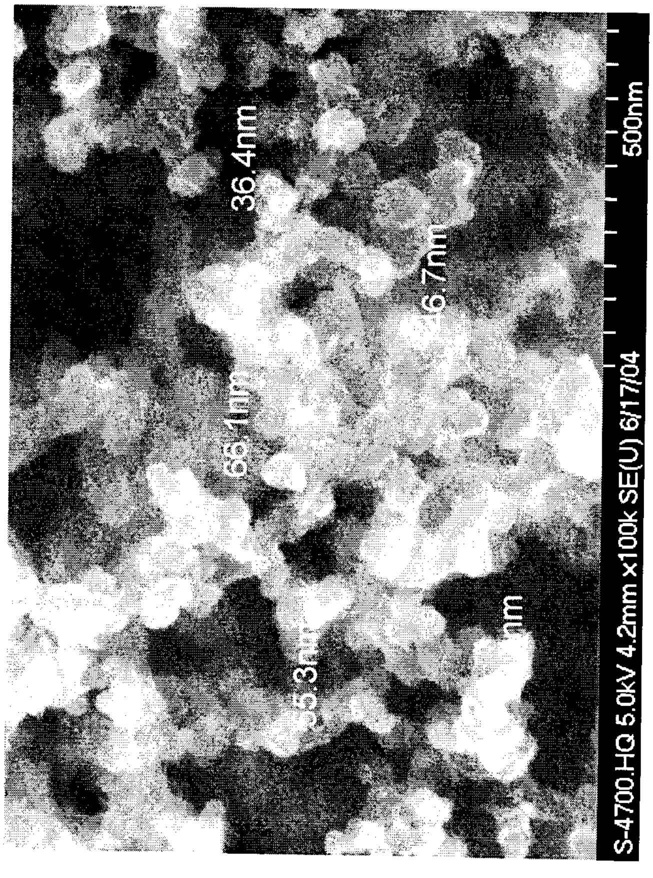
36.4nm
46.7nm
66.1nm
500nm
S-4700.HQ 5.0kV 4.2mm x100k SE(U) 6/17/04

FIG. 4A

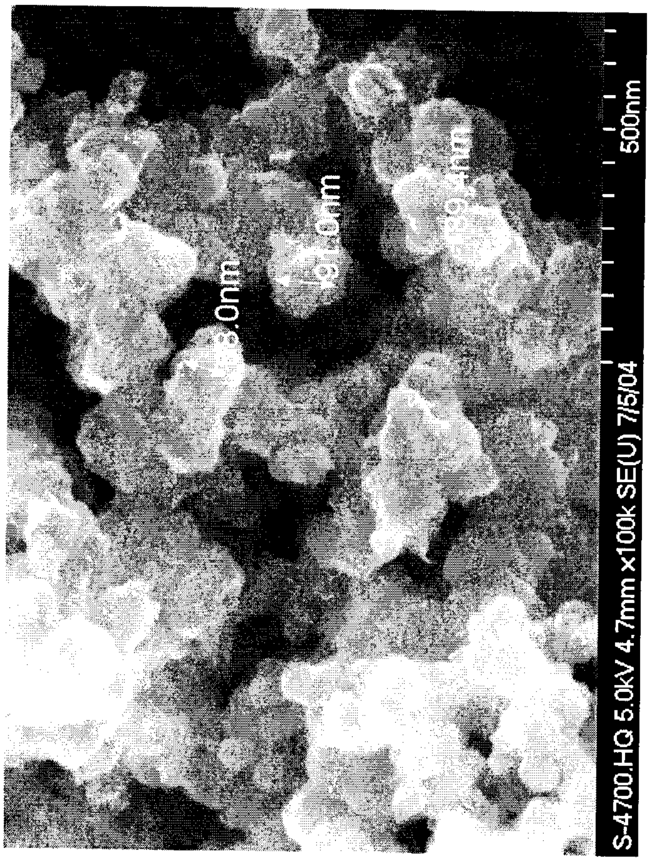
500nm
S-4700.HQ 5.0kV 4.7mm x100k SE(U) 7/5/04

FIG. 4B

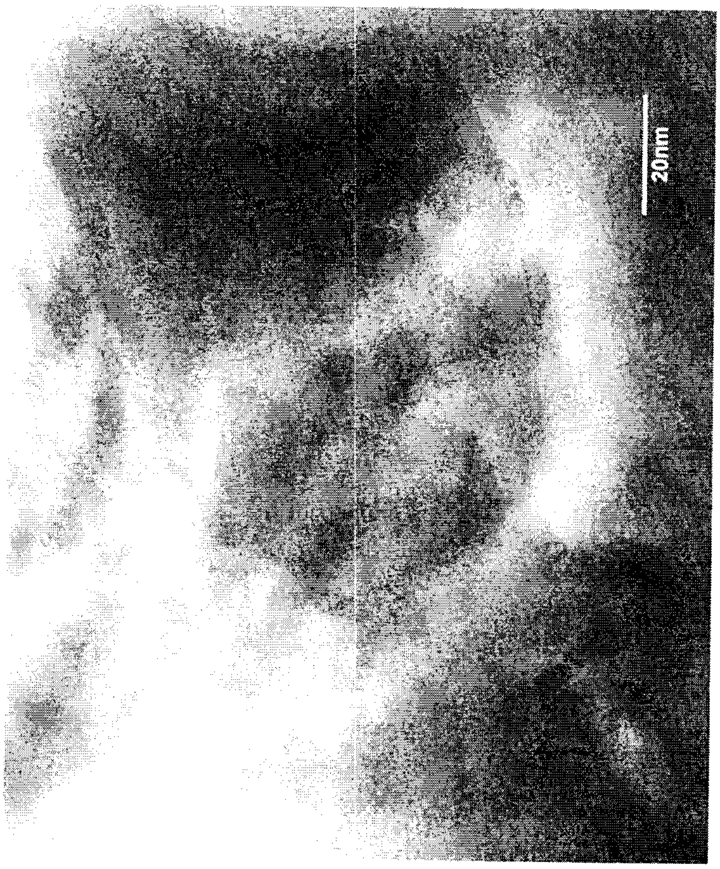


FIG. 5B

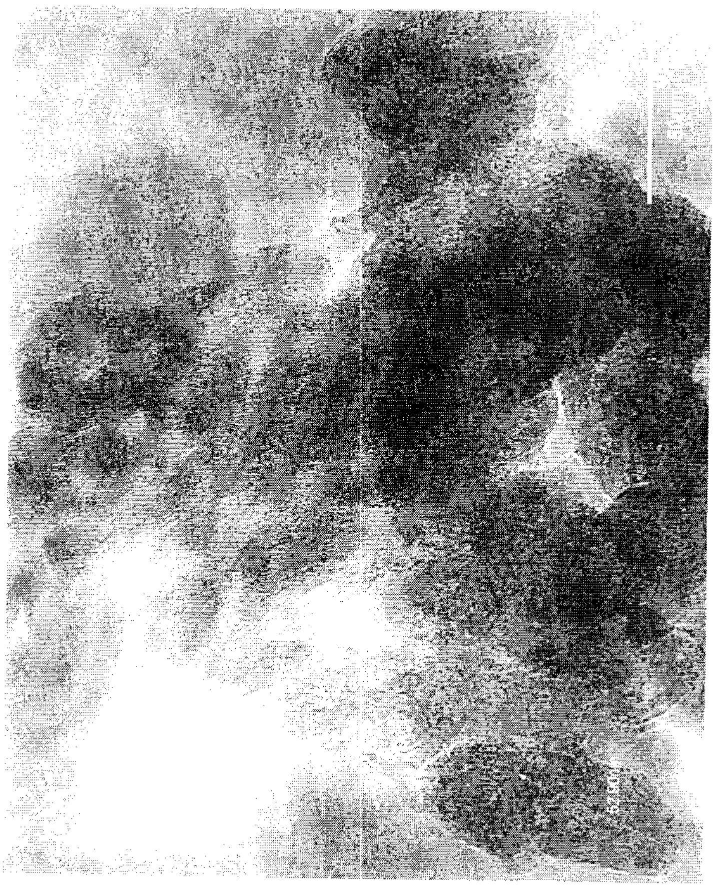

FIG. 5A

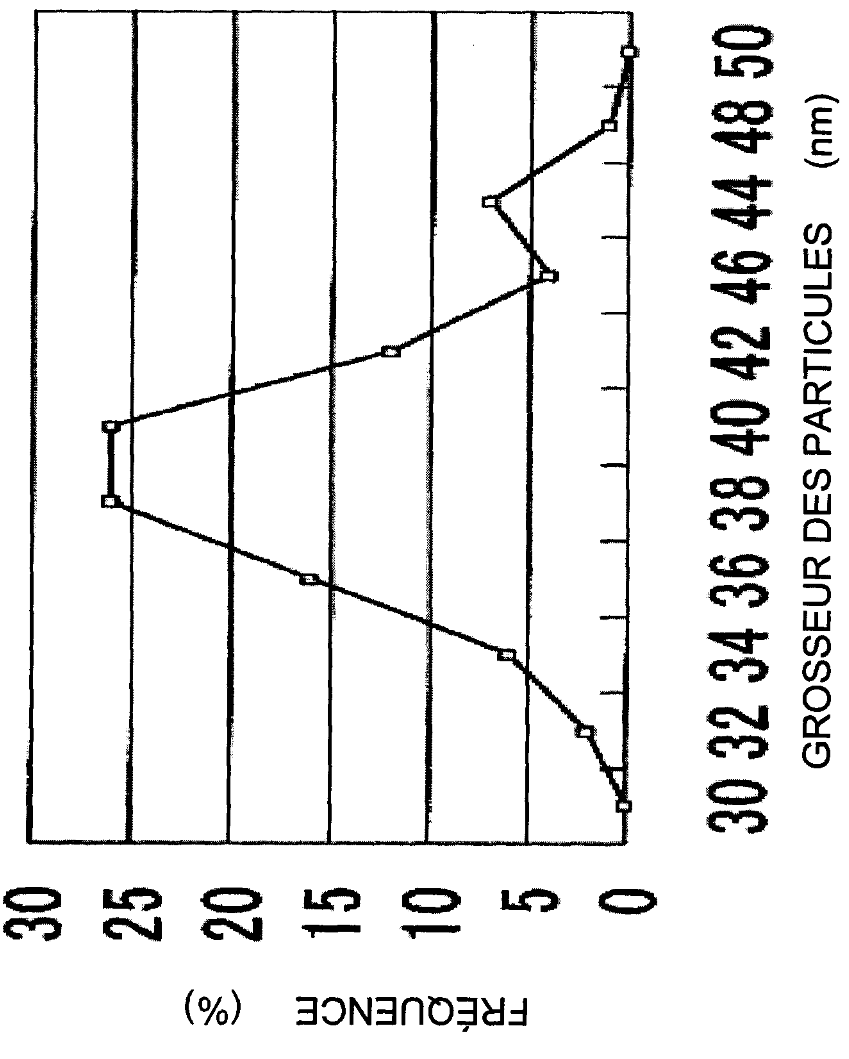
30
25
20
15
10
5
0
FRÉQUENCE (%)
30 32 34 36 38 40 42 46 44 48 50
GROSSEUR DES PARTICULES (nm)

FIG. 6

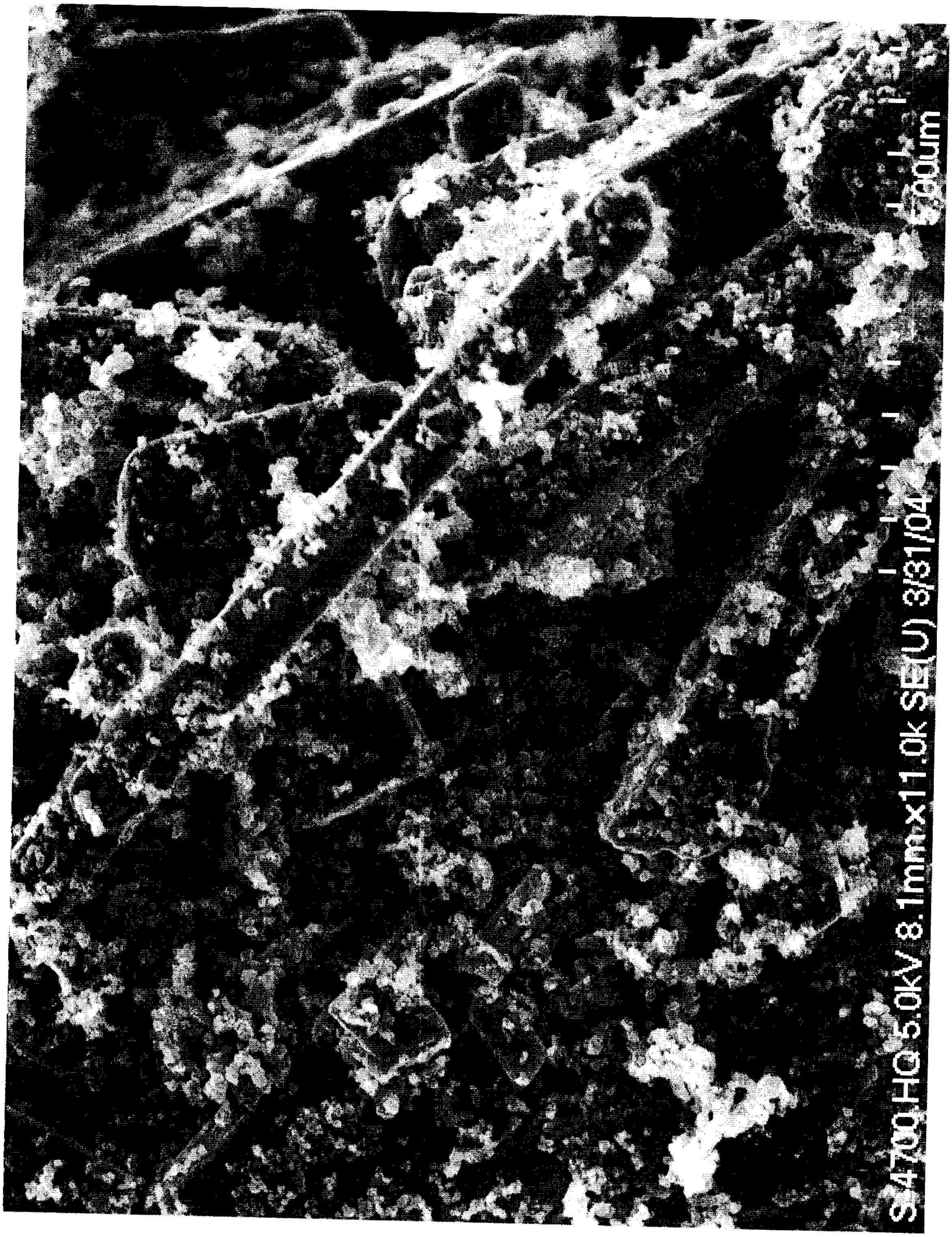


FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- CA 2140456 A
- US 6190804 A
- EP 1249461 A
- WO 03063287 A